# EUROPEAN PATENT APPLICATION

(11) **EP 2 712 882 A1**
(43) Date of publication of application: **02.04.2014**
(21) Application number: 13397531.8
(22) Date of filing: 27.09.2013
(51) Int. Cl.: C08J 5/04, C08K 5/098, C08K 7/02, C08L 23/02, C08L 97/02

(54) **Method and system for manufacturing a polymer composite**

(30) Priority: 27.09.2012 FI 20126008
(71) Applicant: UPM-Kymmene Corporation, 00130 Helsinki (FI)
(72) Inventor: Lehtinen, Liisa, 15610 Lahti (FI); Peltola, Piia, 13100 Hämeenlinna (FI)
(74) Representative: Tampereen Patenttitoimisto Oy

(57) **Abstract**

A method, a system and a product thereof, for manufacturing an organic natural fiber based polymer composite which comprises providing heat to a mixture comprising a natural fiber, a polymer matrix and a coupling agent and adding a lubricant containing metal to said mixture after coupling by said heat and said coupling agent.

## Description

### Technical Field

This invention relates to a method and a system for manufacturing a polymer composite and further to a polymer composite thereof.

### Background Information

Some composite products typically comprise wood material and at least one kind of plastic polymer. Such composite products may be used for several purposes, for example for furniture, deck floors, fences, window frames and door frames.

### Summary

This invention relates to a polymer composite comprising organic natural fiber based material and to a method and a system for manufacturing it. Various aspects of the invention include a method, a product, a system and a use of such method or product, which are characterized by what is stated in the independent claims. Various embodiments of the invention are disclosed in the dependent claims.

Embodiments of this invention comprise a method, system and products thereof for manufacturing composites which may be fabricated into shaped or structural articles. Further, embodiments of this invention comprise use of a lubricant containing metal for manufacturing a cellulose based fiber polymer composite. The products made by embodiments of the method may exhibit desirable properties such as increased mechanical strength, durability, dimensional stability and diminished water absorption while displaying enhanced cost-effectiveness of production in comparison to products manufactured by conventional means.

According to an embodiment there is provided a method for manufacturing a polymer composite comprising organic natural fiber based material. The method comprises providing heat to a mixture comprising organic natural fiber based material and a coupling agent, for coupling the organic natural fiber based material and the coupling agent, and adding a lubricant to said mixture after coupling by the heat and the coupling agent. The mixture may comprise a polymer matrix. The lubricant may contain metal, which may be zinc. The lubricant may be added to the mixture on a range between 0.1 to 5.0 w-%, for example 0.3 to 3.0 w-%. Covalent bonds may be formed between the organic natural fiber based material and the coupling agent. The organic natural fiber based material may comprise cellulose. The organic natural fiber based material may be particles produced by mechanical means and contain lignin. The organic natural fiber based material may contain printing ink. The coupling agent and said polymer matrix may be entangled and hydrogen bonds may be formed between the coupling agent and the polymer matrix. The lubricant may be added to said mixture when said mixture has a temperature between 180°C - 230°C, for example at least 185°C. The coupling agent may be grafted thermoplastic polymer, for example maleic anhydride grafted thermoplastic polymer. The polymer matrix may be thermoplastic polymer. The product may be formed after adding the lubricant, for example by heat and pressure.

According to an embodiment there is provided a composite product that may comprise an organic natural fiber based material, a coupling agent, a polymer matrix and a lubricant containing metal, which may be zinc. The lubricant may be insoluble to a mixture comprising an organic natural fiber based material, a coupling agent and a polymer matrix. A surface of the product may contain a higher concentration of said lubricant compared to the interior of the product. The amount of lubricant added to the composite may be in a range between 0.1 to 5.0 weight-%, for example 0.3 to 3.0 weight-%.

According to an embodiment there is provided a system for manufacturing a polymer composite comprising organic natural fiber based material with a lubricant containing metal, arranged to comprise at least one mixer for forming heat and a mixture comprising organic natural fiber based material, a polymer matrix and a coupling agent and at least one feeder for adding said lubricant to said mixture after coupling by said heat and said coupling agent. The system may be arranged to comprise a control unit capable of monitoring the process temperature of the mixture when adding the lubricant. The system may further comprise at least one feeder for feeding organic natural fiber based material, polymer matrix or coupling agent and one or more dosage units to measure the amounts of materials that are fed to said feeders. The system may be arranged to comprise a device for shaping the polymer composite comprising organic natural fiber based material, for example an extruder or an injection moulding machine. The mixer and device for shaping in the system may be configured to enable the use of a lubricant containing metal in the process.

According to an embodiment there is provided a use for a lubricant containing metal in manufacturing of a polymer composite comprising organic natural fiber based material.

According to an embodiment there is provided a use for a lubricant containing metal in a system configured to manufacture polymer composite comprising organic natural fiber based material.

According to an embodiment there is provided a use for a lubricant containing metal in a polymer composite comprising organic natural fiber based material, for example in a decking board.

### Description of the Drawings

In the following, the invention will be described in more detail with reference to the appended drawings, in which
- Figs 1a and 1b: illustrate the formation of an organic natural fiber based polymer composite structure. In Fig 1a, a lubricant containing metal ions is added after heating the mixture and in Fig 1b, a lubricant containing metal ions is added prior to heating the mixture. The figures are not in any particular scale, and are only meant to be illustrative representations.
- Fig. 2: illustrates a schematic process of manufacturing organic natural fiber based polymer composite.
- Fig. 3: is a graphical presentation of an experiment, where the tensile strength of a composite comprising a lubricant containing metal was compared to a composite comprising a lubricant without metal.
- Fig. 4: is a graphical presentation of an experiment, where the impact strength of a composite comprising a lubricant containing metal was compared to a composite comprising a lubricant without metal.
- Fig. 5: is a graphical presentation of an experiment, where the water absorption of a composite comprising a lubricant containing metal was compared to a composite comprising a lubricant without metal.
- Fig 6a and 6b: show an example of a decking board made of plastic composite comprising organic natural fiber based material.
- Fig. 7: is a graphical presentation of an experiment, where the bending strength and stiffness of various composites, including composites comprising no lubricant or comprising different lubricant of different concentration, said lubricant being added with coupling agent simultaneously or separately, was measured.

### Detailed Description of the Invention

Organic natural fiber based polymer composites are highly desired materials for wood substitutes on many applications both outdoors and indoors, a non-limited exemplary listing including decking boards, construction materials, decorative items, frames, panels, facades, flooring, fencing, decking, stairs, rails, window frames, trims, pallets, containers, household articles, car parts and the like. Organic natural fiber based polymer composites may also be produced as pellets to be further used to manufacture articles as described above. Further, organic natural fiber based polymer composites are appreciated due to their biorenewable properties. They are also less abrasive on processing equipment compared to mineral particle filled composites.

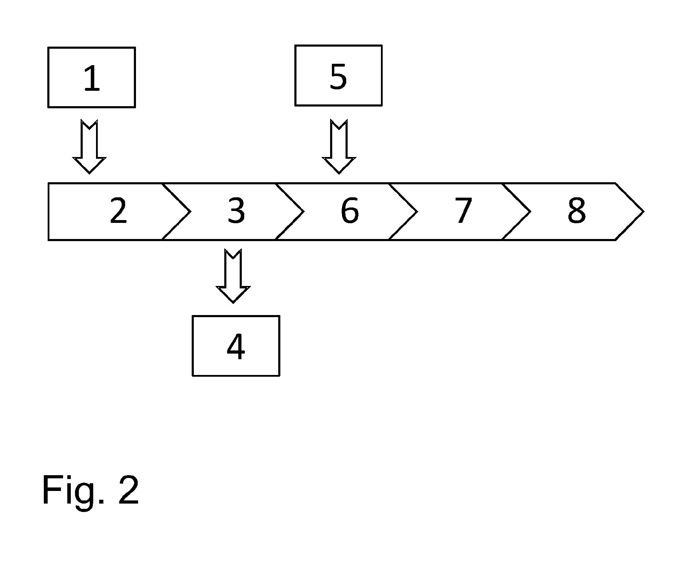

The following items, which are depicted in Figure 2 and referred to in the text, illustrate a process of manufacturing organic natural fiber based polymer composite:
1. First material feeder
2. First mixer
3. Heating device
4. Evaporator
5. Second feeder
6. Second mixer
7. Forming device
8. Cooling device

Organic natural fiber based polymer composites may comprise organic natural fiber based material, polymer matrix, coupling agent and lubricant as primary components. An organic natural fiber based polymer composite comprises at least two or more of these components. Optionally, other additives such as colorants, ultra-violet degradation inhibitors; anti-fungicidal components; anti-microbial components, inorganic fillers or other components may be blended into the composite during the manufacturing process.

The physical and chemical properties of an organic natural fiber based polymer composite, such as ultra violet (UV) radiation resistance, water absorption and mechanical strength, are dependent of the components used in the manufacturing process and of the process conditions and phases. As there exists an increasing demand for these types of special materials in various applications, inventing means to manufacture these materials more cost-efficiently with less raw materials and thus with an environmentally friendly aspect is appreciated. Furthermore, changes in the manufacturing process may lead to enhanced physical properties of the end product, such as increased strength, which may be desirable in various applications.

One aspect having an effect to the manufacturing process is the compatibility of the organic natural fiber based material with the polymer matrix, as these two main components are intended to couple to each other. To facilitate the manufacturing process, an even dispersion of materials during mixing and coupling is desirable. An even dispersion allows an enhanced control of flow properties of the process.

In this context, the terms "organic natural material", "organic natural particles", "fiber material" and "organic natural fiber material" refer to particles, such as fibers or fiber-like particles, that contain cellulose. In other words, the organic natural material can originate from any plant material that contains cellulose. The term "organic natural fiber based material" refers to fiber and fiber-like particles derived from organic natural fiber, which may be organic natural material. The "organic natural fiber based material" may also be material derived from organic natural fiber by a modification, such that the fiber is, for example, treated chemically to alter the structure of the fiber. The term "cellulose" may refer to native cellulose or regenerated cellulose.

In the following disclosure, all percentages are by dry weight, if not indicated otherwise.

The organic natural material can be in the form of fibers, such as floccules, single fibers, or parts of single fibers, or the organic natural material can be in the form of fiber-like particles, such as saw dust or grinded material, where the material does not have exactly spherical form, but the longest dimension of particle is less than 5 times longer than the smallest dimension.

Preferably the organic natural material is, at least partly, in the form of fibers. In other words, preferably at least 40 w-% or at least 50 w-%, more preferably at least 60 w-% or at least 70 w-% of the organic natural materials are in the form of fibers. In this application, the organic natural material having a length of at least 0.1 mm, more preferably at least 0.2 mm are called as fibers, and smaller particles than those mentioned above are called as powder or fiber-like particles. Preferably at least 90 % of the fiber material is under 2 mm length. The term "shape ratio" may be used to refer to the ratio of the length of the fiber to the effective diameter of the fiber. Advantageously, the fiber of the fiber material has shape ratio relating to ratio of the fiber length to the fiber thickness being at least 5, preferably 10, more preferably 25 and most preferably 40. High shape ratio relates to reinforcing component with higher flexibility and impact strength for the same organic natural material content. This can be described by modulus, for example Young's modulus or modulus of elasticity, which is a measure of the stiffness of a material and is used to characterize materials. The organic natural material may comprise reinforcing components in the structure. The organic natural material may comprise non-reinforcing components or fillers in the structure. The organic natural material may comprise both reinforcing and non-reinforcing components in the structure.

The fibers may comprise flakes. Flakes are fibres having a width that is at least 2 times larger than the thickness of the fibres. Preferably at least 80% of the flakes have thickness between 1 micron and 20 micrometers, more preferably thickness of flakes varies from 2 microns to 15 microns. In one embodiment, the organic natural material may contain flake-form fiber material at least 30 dry w-%, preferably at least 50 dry w-% and more preferable at least 70 dry w-% of the total amount of the organic natural material.

The organic natural material may comprise mechanically treated and/or chemically treated particles, such as fibers or fiber-like particles. The treated particles used may comprise at least 30 w-% or at least 40 w-%, more preferably at least 50 w-% or at least 60 w-%, and most preferably at least 80 w-% or at least 90 w-% of mechanically treated organic natural material.

The term "mechanically treated" may refer to organic natural material, which is isolated from any organic natural raw material comprising cellulose by a mechanical pulping process. The mechanical pulping process could be preceded by a chemical pretreatment, producing chemimechanical pulp. The mechanically treated organic natural material may be, for example, ground, refined and/or powdered from the source used. In other words, the source of the organic natural material may be mechanically treated but not chemically treated. The mechanically treated organic natural material may comprise, among other things, wood flour, saw dust, chip material, and/or mechanical pulp such as TMP (thermo mechanical pulp), GW (groundwood pulp) / SGW (stone groundwood pulp), PGW (pressure groundwood pulp), RMP (refiner mechanical pulp), and/or CTMP (chemithermomechanical pulp). The mechanically treated organic natural material preferably comprise or consist of wood particles, such as wood fibers, but they may also comprise or consist of non-wood material. The mechanically treated organic natural material may comprise recycled and/or virgin particles, such as fibers or fiber-like particles. For example, at least 30 w-% or at least 40 w-%, more preferably at least 50 w-% or at least 60 w-%, and most preferably at least 80 w-% or at least 90 w-% of the organic natural material used may be virgin. For example, a wood plastic composite (WPC) may comprise the saw dust or at least other mechanically treated wood or plant particles as main organic natural material. Mechanically treated organic natural material typically comprises lignin. In mechanically treated organic natural material, such as cellulose based fibers, lignin is present in various amounts, but typically in higher amounts than in chemically treated natural fibers. Lignin is a highly polymeric material, able to crosslink and may act as a water repellent in a cellulose based fiber plastic composite. For example in wood cells the presence of lignin limits the penetration of water into the wood cells, which makes the structure very compact. Fiber material comprising lignin, however, is prone to decompose (burn) more easily in high temperatures than fiber material free of lignin. This may be problematic in manufacturing cellulose based fiber polymer composite, if the production method requires extensive time at high temperatures. Therefore, the production steps may be designed in a way to first flash heat lignin containing material to a required temperature, such as at least 180°C or 185°C. Further, the duration of the process at high temperatures such as at least 180°C or 185°C, may be shortened and the friction of the material against machine surfaces decreased. These steps function to prevent the decomposition of lignin and thereby enhance the quality of the production.

The chemically treated organic natural material may comprise, among other things, chemical pulp. The chemical pulp may be, for example, from kraft process or sulfite process, but also other chemical processes may be used, such as a soda pulping process. The chemical pulp may be from a kraft process. The chemically treated organic natural material may comprise or consist of wood based cellulose, but they may also be non-wood material. The chemically treated organic natural material may comprise recycled and/or virgin particles, such as fibers or fiber-like particles. Advantageously, lignin content of the chemically treated pulp is under 15 wt-%, preferably under 5 w-%, more preferably under 1 w-% and most preferably under 0.5 w-%. Preferably, the alfa cellulose content of the chemically treated pulp is above 50 w-%, preferably above 60 w-%, more preferably above 70 w-% and most preferably above 80 w-%.

The wood material can be softwood trees, such as spruce, pine, fir, larch, douglas-fir or hemlock, or hardwood trees, such as birch, aspen, poplar, alder, eucalyptus, or acacia, or a mixture of softwoods and hardwoods. Non-wood material can be agricultural residues, grasses or other plant substances such as straw, coconut, leaves, bark, seeds, hulls, flowers, vegetables or fruits from cotton, corn, wheat, oat, rye, barley, rice, flax, hemp, manila hemp, sisal hemp, jute, ramie, kenaf, bagasse, bamboo, or reed. In an advantageous example, at least 30 w-% or at least 40 w-%, more preferably at least 50 w-% or at least 60 w-%, and most preferably at least 80 w-% or at least 90 w-% of the organic natural fiber material used is wood based.

The organic natural fiber material may be, at least partly, in the form of paper sheet or web, board sheet or web or pulp sheet or web, or compacted fiber matrix or pieces of compacted fibers and their combinations.

The organic natural material may be, at least partly, in the form of large fiber or fiber bundles, paper chaff, pulp chaff, crushed pulp material, derivates thereof and their combinations.

The organic natural material may also comprise regenerated or modified organic natural fiber based material. An exemplary and non-limiting list of such materials includes viscose, modal, cupro, carbamate, biocelsol and lyocell fibers. Dissolving pulp, which can be used to manufacture viscose, is also an example of a regenerated cellulose fiber. Fibers made of cellulose carbamate or fibers regenerated at least partly to cellulose from the carbamate and containing silicon dioxide in their structure can be used in similar applications as viscose (rayon) fibers. Cellulose carbamate is a known material which is based on the reaction between cellulose and urea. These regenerated fibers may further be modified, for example by chemical treatment, to produce materials which are suitable for manufacturing of polymer composites comprising organic natural fiber based material. Due to the chemical treatments, regenerated or modified cellulose fibers are typically lignin free.

The organic natural fiber material may comprise recycled material, for example raw material pulp of recycle streams of wood materials. The recycled material may for example comprise recycled paper material. Inorganic fillers, such as glass fibers, carbon fibers, talc, mica, kaolin, calcium carbonate, and the like, may be included as an optional supplement to the organic natural fiber. In addition, other organic fillers, including any suitable polymeric fiber, may also be used.

The polymer matrix used in polymer composites comprising organic natural fiber based material may be a polyolefin. The polymer matrix may comprise, for example, a homopolymer, a copolymer or a modified polymer of unsaturated aliphatic hydrocarbons. A modified polymer may have been obtained, for example, by attaching a functional group into the polymer backbone. A maleic anhydride may be an example of a compound suitable to be attached as a functional group into the polymer backbone, whereby maleic anhydride grafted polymer may be obtained. Polymers, which may be used in polymer composites comprising organic natural fiber based material may comprise, for example, polyethylene, polypropylene, polystyrene, polyamides, polyesters, and combinations thereof. Among the preferred polyolefins are C₂- C₄ polyolefins, polyethylene and polypropylene being most preferred due to their recyclability. Polyethylene and polypropylene are also available in high purity grades without process interfering residues. In addition they have a low surface energy, which may make them less likely to attach to any metal ions, which may be present. The polymer matrix may be plastic polymer, such as a thermoplastic polymer. A thermoplastic polymer may be suitable for polymer matrix in polymer composites comprising organic natural fiber based material. A suitable thermoplastic polymer retains sufficient thermoplastic properties to allow melt blending with organic natural fiber based material and permits effective formation of the formed composite into shaped articles by the used production method, extrusion or injection molding being examples. Minor amounts of thermosetting resins or other residues, such as polyurethane, may be present in the polymer compositions without sacrificing the thermoplastic properties.

The polymer matrix may comprise recycled polymer. Alternatively, the polymer matrix may comprise virgin polymer. In addition, the polymer matrix may comprise both recycled polymer and virgin polymer. The virgin polymer may be plastic polymer, which may be added to the polymer matrix. The amount of the added plastic polymer, such as polypropylene, may depend on the other raw materials used. For example, if recycled polymer material is used, the amount of added virgin polymer may depend on the amount of the different raw materials coming along the recycled material. The recycled raw material may comprise paper or plastic polymer or both paper and plastic polymer. The recycled raw material may also comprise paper containing lignin, print ink, silicone or adhesives. The recycled material may comprise paper and plastic polymers which originate as surplus in self-adhesive label production. The proportion of the recycled paper and recycled plastic polymer may vary depending on the product application. For example, the adhesive label laminate waste may originate from adhesive label laminate production, which primarily produces production reject waste, edge cuttings from rolls and roll ends; from adhesive label laminate printing stations, producing primarily roll ends and label material left over from the die cutting of stickers and labels as well as reject; and/or from the end user clients of the adhesive label laminate, who paste the printed stickers and labels or the like onto their products. The waste coming from the end users may primarily be release material, roll ends, and waste from the finished product. The adhesive label laminate waste may typically be formed of label material, an adhesive layer, and release material. The liner of the label may be a paper having a silicone coating or a plastic coating. The plastic polymer may preferably be polypropylene. The plastic polymer may also be polyethylene, polypropylene, polystyrene or polyester. The composite comprising organic natural fiber based material may comprise 10 - 90 w-% of polymer matrix, advantageously 20 - 60 w-% of polymer matrix. The polymer matrix may comprise 10 - 90 w-% of dosed plastic polymers. The amount of the adhesive label laminate waste in the polymer matrix may be between 10 to 90 w-%. The adhesive label laminate waste may comprise, for example, adhesives 0 to 5 w-% or 1 to 4 w-%, silicone 0 to 10 w-% or 1 to 9 w-%, cellulose fibers 20 to 100 w-%, and polymers 0 to 100 w-% or 5 to 95 w-%. Inorganic fillers may be added in order to increase the stiffness properties of the product. The amount of the inorganic fillers in the composite comprising organic natural fiber based material may preferably be between 0 and 25 w-% or 1 and 20 w-%. The inorganic fillers preferably consist mostly of talc and/or calcium carbonate and/or fly ash and/or mica and/or glass-filler (i.e. at least 50 w-% from the fillers). The composite comprising organic natural fiber based material may be coloured, for example, by using pigments. Therefore, the composite comprising organic natural fiber based material may comprise colours.

A coupling agent or a compatibilizer refers to a compound that tends to promote dispersion and/or compatibilization of the organic natural fiber based material, such as cellulose fibers, and the polymer matrix. A coupling agent may be an amphiphilic component that helps to promote and maintain intimate contact between polar and non-polar components in a mixture. In other words, the coupling agent may be used to enhance the even dispersion of the cellulose based fiber to the polymer matrix and to improve the interfacial adhesion between the non-polar polymer matrix and the polar cellulose based fiber material during processing. The coupling agent may be employed as a grafted polymer surfactant, wherein a polymer backbone is modified to comprise at least one functional group that may be used for coupling ordinarily non-polar polymer matrix to polar organic natural fibers. Preferably the functional group may be unsaturated and comprise a double bond. The double bond may be used in coupling the functional group into the hydroxyl group of the fiber. The coupling agent may comprise unsaturated carboxylic acids or unsaturated carboxylic acid anhydrides. For example, maleic anhydride may be used. Alternatively, derivatives of such carboxylic acids, and mixtures thereof may be used. Examples of such acids and anhydrides are mono-, di- or polycarboxylic acids such as acrylic acids, methacrylic acid, maleic acid, fumaric acid, itatonic acid, crotonic acid, itatonic anhydride, maleic anhydride and substituted maleic anhydride, e.g., dimethyl maleic anhydride or citrotonic anhydride, nadic anhydride, nadic methyl anhydride and tetrahydrophtahlic anhydride. Examples of the derivatives of the unsaturated acids are salts, amides, imides and esters, e.g., mono- and disodium maleate, acrlyamide, maleimide, glycidyl methacrylate and dimethyl fumarate. Grafted polymers are commercially available and their use is well known to a person skilled in the art.

A coupling agent may have two functional domains; a first domain to form entanglements with the polymer matrix and a second domain to strongly interact with the organic natural fiber based material. These interactions increase the interface adhesion between the polymer matrix and the organic natural fiber based material. In other words, the composite may have been formed through a first coupling, such as covalent ester bonding, formed between the organic natural fiber based material and the coupling agent and a second coupling, such as hydrogen bonding, formed between the coupling agent and the polymer matrix. Said coupling may, in addition to the covalent and hydrogen bonding, take a form of an entangled structure, where the organic natural fibers are dispersed to the coupling agent. In other words, in addition to a chemical reaction taking place in the coupling, the organic natural fiber may be physically attached to the coupling agent that comprises an entangled polymer matrix. Said physical attachment may facilitate the forming of a stable structure. Coupling may occur also between a coupling agent that comprises a grafted thermoplastic polymer, such as a maleic anhydride grafted polymer, and a polymer matrix. Said coupling takes place through hydrogen bonds and entanglements that are formed between the coupling agent and the polymer matrix. This type of bonding may lead to a higher tensile strength of the composite.

The coupling agent may comprise a grafted thermoplastic polymer. Alternatively, the polymer matrix may comprise a grafted thermoplastic polymer. In addition, the coupling agent may comprise the polymer matrix. In other words, if the coupling agent comprises a thermoplastic polymer it may be used to replace the polymer matrix. As an example, the coupling agent may comprise maleic anhydride, also known as 2,5-furandione, dihydro-2,5-dioxofuran, toxilic anhydride or cis-butenedioic anhydride. Maleic anhydride may be provided to the process as a grafted polymer. The grafted polymer comprising a functional group, such as a maleic anhydride in the polymer backbone may be inactive unless sufficient amount of energy for the coupling between the coupling agent and the fibers to commence is provided. This can be done, for example, by heating to the material to an activation temperature where the coupling may begin. The coupling may be a chemical reaction, such as a covalent bonding. In other words, in order for the coupling agent to be activated a certain activation energy level may have to be reached, which is achieved by introducing sufficient amount of heat into the system. Once the activation energy level has been reached, coupling may be formed via a covalent bonding between a grafted polymer and an organic natural fiber based material, to form a stable and durable structure.

Alternatively, the coupling agent may be formed by arranging an unsaturated carboxylic acid or an anhydride compound to react with a polymer to form a grafted compound through covalent bonding in the process of manufacturing organic natural fiber based polymer composite.

To start the manufacturing of the polymer composite comprising organic natural fiber based material, the raw materials may be brought together to form a mixture mixture comprising organic natural fiber based material, polymer matrix and a coupling agent. The mixture may be referred to as melt. The mixture comprising organic natural fiber based material, polymer matrix and a coupling agent may be heated until the mixture has reached a temperature of at least 180°C, preferably at least 185°C, to reduce the amount of moisture from the mixture and to achieve coupling between the coupling agent and the organic natural fiber based material. In said temperatures said coupling takes the form of covalent bonding. The temperature of the mixture may advantageously be even higher, such as at least 200°C, where the reaction may take place even more rapidly and efficiently. If the process temperature is increased further, the organic natural fiber based material may begin to lose its structure and decompose; therefore material temperatures less than 230°C in the process are preferred. Reduction of the moisture may be important, as when the coupling agent, such as a maleic anhydride, is activated, it begins to react. To further reduce the moisture an optional evaporator may be used. During this step, where a polymer matrix and a coupling agent may be in a flowing form due to provided heat and/or pressure, coupling agents may form two types of chemical bonds; either covalent bonds between polar fiber and non-polar polymer or hydrogen bonds, such as those with water molecules. To achieve covalent bonding between polar fibers and non-polar polymers, sufficiently high temperatures, such as those described above, should be used.

Alternatively, the organic natural fiber based material and the polymer matrix may have a temperature between 230°C - 180°C, advantageously between 220°C - 185°C, when coupling agent is added to the process. The coupling between the coupling agent and the organic natural fiber based material may then initiate after mixing the said components, while the temperature of the mixture is held at a temperature of at least 180°C, preferably at least 185°C. In said temperatures said coupling takes the form of covalent bonding. In addition to covalent bonding, this procedure achieves to reduce the amount of moisture from the mixture.

Alternatively, the organic natural fiber based material and the polymer matrix may have a temperature between 230°C - 180°C, advantageously between 220°C - 185°C, when coupling agent is added to the process. The covalent bonding between the coupling agent and the organic natural fiber based material may then initiate after mixing the said components, while the temperature of the mixture is maintained or decreased, but during the bonding kept at a temperature of at least 180°C, preferably at least 185°C. In addition to covalent bonding, this procedure achieves to reduce the amount of moisture from the mixture.

High temperatures, such as those above 180°C, are favoured for covalent bonding. While the covalent bonding, depending of the used organic natural fiber based material, polymer matrix and coupling agent, may initiate already in lower temperatures than 180°C, the covalent bonding between the organic natural fiber based material and the coupling agent may not be favored and hydrogen bonding may occur. The bonding energy level of hydrogen bonding is on the range of ca. 5 to 30 kJ/mol, while covalent bonding has a level of ca. 70 to 700 kJ/mol. Therefore, the stability of composite with covalent bonding between the organic natural fiber based material and the coupling agent is higher than with hydrogen bonding. In other words, a covalent bonding, once occurred between the organic natural fiber based material and the coupling agent, is stable and not easily interfered by impurities or competing molecules that may later occur in the production of composite comprising organic natural fiber based material. In addition, high temperatures are needed to reduce the moisture content in the mixture and evaporate the water molecules out of the melt, as hydrogen bonding is susceptible for moisture. Water molecules may break a hydrogen bond between a fiber and a coupling agent, which decreases the mechanical strength of the composite structure. This may also happen with surface water molecules, which may cause a disruption of the hydrogen bonds.

The energy input during the melting and mixing should be high enough in order to be able to remove the water from the fiber surface but also to evaporate the water formed in the possible condensation reaction of an anhydride to acid. If water is not removed from the melt the bonding may rather occur between coupling agent and water as a hydrogen bonding.

Lubricants are additives used in production of organic natural fiber polymer composite structures in an effort to control and increase output rate. They are known to those skilled in the art also as a process aids, release agents or slip agents. The lubricants can be for example metal ion comprising substances, such as stearic acid salts (stearates) or synthetic waxes, which are free of metal ions. Lubrication and release properties, as well as water repellence, are characteristics of metallic stearates. The special effects of these properties are determined by the cation (metal ion), the chain length of the fatty acid and certain other properties, such as the water of crystallisation content, of the respective metallic stearate. Metal ions suitable for stearates can be, for example, but not limited to, zinc, calcium, magnesium, barium, lead or aluminium. Stearates may also contain a combination of one or more of these metal ions or similar ones.

The lubricants used in production of polymer composites comprising organic natural fiber based material may be distinguished as either internal or external lubricants. Internal lubricants reduce the internal friction, improve the flow properties and the homogeneity of the melt, make fibers slip and the mixture form more easily. They may be soluble or partially soluble in a polymer and may settle on the interface of agglomerates, pigments or polymer chains. A non-limiting example listing of internal lubricants comprises fatty acids, esters of long-chain fatty acids, polyethylene waxes and white oils. External lubricants reduce the friction of the material in contact with the wall of the processing machine, reduce the friction of the particles among themselves and the adhesion of the polymer melt on the tool. Because of its insoluble properties in plastics the external lubricant may migrate to the surface during the processing action, accumulate there and act as a lubricant, which may additionally increase the smoothness and the sparkle of the surface of the end product. A non-limiting example listing of external lubricants comprises metal stearates, fatty acid amide esters, silicon oils, paraffin oils, and glycols.

When manufacturing polymer composite comprising organic natural fiber based material with a coupling agent, maleic anhydride being a non-limiting example, the use of special types of lubricants compatible for this purpose is preferred. The lubricant may have an antagonist effect with a coupling agent. For example, a coupling between maleic anhydride and organic natural fiber based material can be interfered by metal ions or other impurities, such as different pigments in the melt. For polymer composites comprising organic natural fiber based material a source of metal ions may be the lubricant. The anhydride may favor more coupling between metal ions than with OH-groups of organic natural fiber based material. Therefore, when these types of metal ions are available the coupling between said fiber and plastic may not be adequate. The lack of proper covalent bonding between the organic natural fiber based material and the coupling agent may lead to unsatisfactory composite structures that do not have the desired physical properties, such as durability or strength, and may be poorly suited for the intended applications.

The compatible lubricants in the manufacture of polymer composites comprising organic natural fiber based material do not contain metal ions, which might cause unwanted reactions with the coupling agent. Examples of such lubricants can be for example blends of complex, modified fatty acid esters. However, the use these types of special compounds has been challenging as they may be expensive and required in higher amounts in comparison to compounds comprising metal ions.

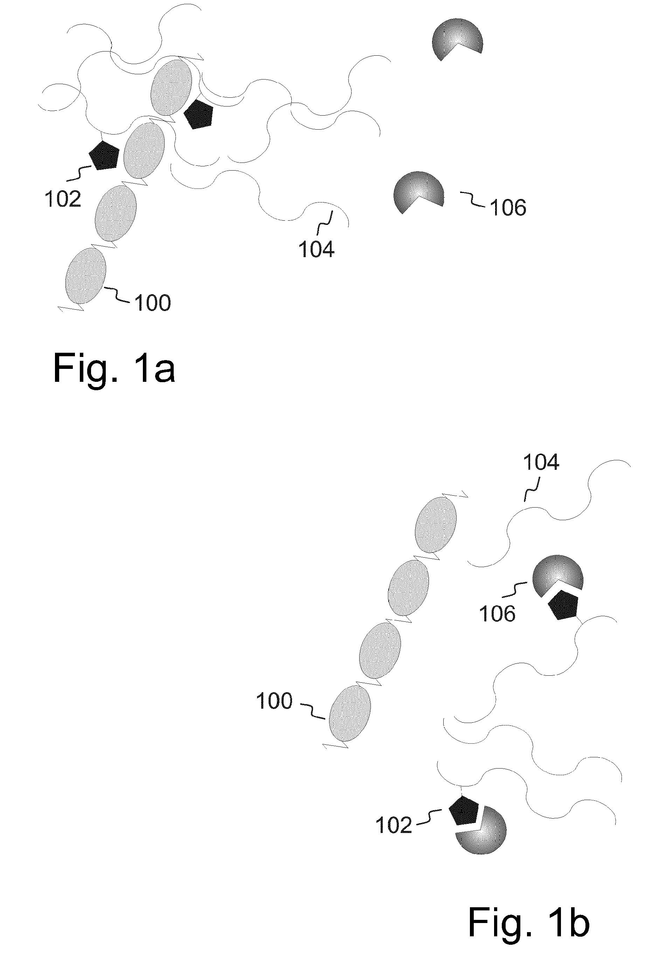

Fig 1 a illustrates a schematic process of manufacturing polymer composite comprising organic natural fiber based material. Here, an organic natural fiber based material 100, a coupling agent 102 in the form of a grafted polymer surfactant and a polymer matrix 104 have been arranged to form an entangled and interlacing composite structure. The organic natural fiber based material 100 and the coupling agent 102 may be coupled to each other, and the polymer matrix 104 is entangled to the organic natural fiber based material 100. Grafted polymer surfactant and the polymer matrix 104 may be entangled to each other and further bonded by hydrogen bonds. As the interlacing structure exist, and the coupling may have been arranged to take place prior to the addition of a lubricant comprising a metal ion 106, the said metal ion 106 does not interfere and cause undesired effects to the polymer composite comprising organic natural fiber based material.

Fig 1b illustrates a schematic process of manufacturing polymer composite comprising organic natural fiber based material, where a lubricant comprising a metal ion 106 may have been added to a mixture before an organic natural fiber based material 100, a coupling agent 102 in the form of a grafted polymer surfactant and a polymer matrix 104 have been arranged to form an entangled and interlacing composite structure. Here, the coupling agent 102 may favour more bonding between the metal ion 106 than coupling to the organic natural fiber based material 100. This may lead to poor composite structure that does not have the desired properties and may be poorly suited for the intended applications.

The forming of composite material into shaped articles can be done by a number of methods, extrusion, injection molding, compression molding, foaming or the like being example techniques. The manufacturing methods are well known to those skilled in the art. In order for the production techniques to be efficient from a commercial point of view, it would be appreciated if these processes could be carried out at a relatively high rate and with a minimum of operational problems. Polymeric materials have a macromolecular structure with melts of high viscosities. The processing of these melts in injection molding machines and extruders is only possible under pressure. In the machines and tools maximum temperature and mechanical forces are built up due to shearing and friction which exceed the chemical stability of the macromolecules. Lubricants improve the rheology of the melt by reducing the internal (molecule/molecule) and external (polymer/metal) dissipations. For an extrusion with a high shear rate lubricants may be necessary in order to avoid malfunctions on the extrudate surface and to prevent melt fracture. Forming by extrusion with a lubricant may provide a simple and efficient method for the process optimization by enabling a continuous tuning of the process parameters to alter the material flow.

In this invention, a novel method was developed for arranging the reagents and preparing them to the manufacturing phase. Conventionally organic natural fiber based material, polymer matrix, coupling agent and lubricant may be mixed together at the same time for good homogeneity and flow properties. Therefore, due to the antagonist effect that may occur between a coupling agent and a lubricant, said lubricant does not contain metal. It was surprisingly and contrary to the expectations learned that by changing the procedure order in the production said lubricant could be replaced by another containing metal, such as zinc. Zinc stearate is a strong release agent, insoluble in polar solvents but more soluble in aromatic hydrocarbons when heated. It can be easily incorporated to a manufacturing process, it contains no electrolyte and has a hydrophobic effect. Alternatively, a lubricant may contain other metal ions such as calcium, magnesium, barium, aluminum or lead. Contrary to expectations the use of a metal ion did not disturb the manufacturing process nor the properties of the polymer composite comprising organic natural fiber based material. Rather, it made the process convenient to control and optimize, and improved the relative tensile and impact strength and diminished the water absorption of the end product. It was contemplated that heating a mixture comprising an organic natural fiber based material and a coupling agent enables coupling between said cellulose based fiber and said coupling agent. Once said coupling has occurred, the structure thus formed was stable. Adding a lubricant containing metal after said coupling does not break the structure nor interfere with the coupling agent. It was further considered that a lubricant containing metal may function as an external lubricant. Therefore, it can be insoluble in the polymer matrix and migrate towards a surface of the composite during a forming process, for example extrusion. This may lead to a composite where a surface of the product contains a higher concentration of said lubricant in comparison to the interior, which may further have an influence on higher durability and better impact and tensile strength of the composite. The tendency to migrate to the surface may allow to reduce the amounts of lubricant used for the process, which may lead to diminished amounts of material used and further to a cost-efficient production. If a lubricant comprising zinc stearate was added to the process in a stage when a coupling between the organic natural fiber based material and the coupling agent had already taken place, the thus formed polymer composite comprising organic natural fiber based material appeared to present said desirable effects of higher durability and improved impact and tensile strength, especially after treatment with ultra violet (UV) radiation in a weathering chamber. The weathering with UV radiation is of notice, as weathering is a common problem in products exposed to sunlight and UV radiation affects the polymer chains. Weathering may cause cracks or disintegration of the material, which is known as degradation.

Fig 2 illustrates a schematic process of manufacturing polymer composite comprising organic natural fiber based material. The manufacturing process may comprise one or more of the following operations: adding components via a first feeder 1 to the process and mixing the components with a first mixer 2, providing heat to the components with a heating device 3, reducing the amount of moisture in the mixture with an optional evaporator 4, initiating a coupling between the coupling agent and the organic natural fiber based material in a mixture, adding the lubricant and possible other additives such as pigments to the mixture after said coupling via a second feeder 5 and mixing the components with a second mixer 6 to produce the desired polymer composite comprising organic natural fiber based material by forming device 7 such as an extruder or by other appropriate means, and cooling down the product with a cooling device 8. After cooling down, the profiled article may be cut or machinated to a desired size and shape. There are many variations to the process steps which can be implemented. For example, the first feeder 1 and first mixer 2 may optionally be combined into a single unit. Further, the first mixer 2 and the heating device 3 may optionally be combined into a single unit. The optional evaporator 4 may be situated either at the first feeder 1, the first mixer 2, heating device 3 or at a later phase. The second feeder 5 may be optionally located together with the forming device 7, and the forming device 7 may in this case optionally function as the second mixer 6.

The system arranged to manufacture polymer composite comprising organic natural fiber based material may comprise a first feeder 1, a first mixer 2, a heating device 3, an optional evaporator 4, a second feeder 5, a second mixer 6, a forming device 7 and a cooling device 8.

The first feeder 1 or the second feeder 5 suitable for the manufacturing process can be for example a gravimetric or volumetric dosing unit, a hopper feeder, a pneumatic feeder or the like. The system may comprise one or more dosage units to measure the amounts of materials that are fed to said feeders. The feeder may be used to feed any material required in the production of a composite comprising organic natural fiber based material, for example organic natural fiber based material, polymer matrix, coupling agent or lubricant.

The first mixer 2 or the second mixer 6 suitable for the manufacturing process may be for example a hot-cold mixer, a high speed mixer, a rotor mixer, a ribbon mixer, a paddle mixer or the like. In situations where the organic natural fiber based material comprises lignin using a mixer before extruder may be advantageous to shorten the process duration at high temperatures. Lignin does not tolerate well high temperatures and subsequently organic natural fiber comprising lignin decomposes easily in high temperatures. The mixer 2 may be used to flash heat the mixture comprising lignin containing organic natural fiber based material and a coupling agent. In comparison to using an extruder to elevate the temperature of the material gradually to a process temperature such as at least 180°C, a flash heating by a mixer yields better quality end product and prevents decomposition of the organic natural fiber based material. After coupling, a lubricant may be added to the mixture. Advantageously, in organic natural fiber based material where lignin is present, a lubricant containing a metal may be used. This acts as an external lubricant and may migrate towards the surface during the processing action, thereby decreasing the friction between the material and the machine surfaces. Decreased friction at the surfaces helps to control the flow rate and process temperature and thereby prevents the lignin from decomposing. The length, distribution and dispersion of the organic natural fiber based material may play a significant role in the reinforcing efficiency of the composite comprising organic natural fiber based material. In hardwood the aspect ratio is typically smaller than in softwood, which relates to a larger surface area per weight unit in hardwood. This highlights the meaning of properly coupled hydroxyl groups of the organic natural fiber based material when using hardwood. The various types of mixers used in a manufacture of a organic natural fiber based polymer composite are well known to a person skilled in the art.

The heating device 3 suitable for the manufacturing process may be a device producing heat as a cause of friction due to altered process parameters or may introduce externally generated heat into the process. Examples may be a pre-extrusion heater, a mixer such as an internal batch mixer or a Banbury mixer or an extruder providing shear heating, such as a single or a twin screw extruder. Optionally, heating may be arranged externally by an electrical heater or a fan heater. Advantageously the system may be arranged to comprise a control unit capable of monitoring the process temperature of the mixture when adding the lubricant.

The optional evaporator 4 suitable for the manufacturing process may be for example a reduced pressure or free flow evaporator.

The cooling device 8 suitable for the manufacturing process may be for example a water bath or a shower.

The forming device 7 suitable for the manufacturing process may be for example an extruder, such as a conical or parallel, twin or single screw extruder. The instrument may have various shaped die patterns for forming the composite material into a desired shape. Optionally, the forming device 7 may be an injection moulding instrument.

The organic natural fiber based material and the anhydride grafted polymer matrix may be introduced into the process by the first feeder 1, which may be a hopper. The materials may be homogenized mechanically with a first mixer 2, which may be a hot-cold mixer used also as a heating device 3. The optional evaporator 4 may be connected to the first mixer 2. The dispersed material may then be sufficiently heated up to a mixture temperature of at least 180°C, more preferably to a mixture temperature of at least 185°C, but not above 230°C, more preferably not above 220°C, where the moisture content of the material is reduced and the amount of disadvantageous water molecules present reduced, which may allow arranging a coupling to occur between the organic natural fiber based material and the coupling agent. Said coupling may be a reaction where covalent bonds are formed. A control unit capable of monitoring the process temperature of the mixture may be used to tune and monitor the process temperature during the manufacturing process. Once said coupling has taken place the composite structure is stable and from this stage onwards any metal ions introduced to the system by a lubricant or other material such as pigments may not interfere the manufacturing process. The lubricant may thus be added to the system by a second feeder 6 and mixed at any point after said coupling or prior to the shaping of the material at the forming device 7. The forming may be done for example by extrusion with a die.

Alternatively, a polymer matrix and a coupling agent may be melted prior to feeding to the system. Thus formed melt may then be fed to the system through a first feeder 1, and the melt may be mixed with organic natural fiber based material in a first mixer 2, for example in a hot-cold mixer, from which the mixed material is further conveyed to a heating zone where a heating device 3 is arranged to reduce the amount of moisture from the mixture. An optional evaporator 4 may be arranged to vent the moisture out of the system. When the temperature is between 180°C and 230°C the organic natural fiber based material and the coupling agent may form covalent bonds, and the entangled structure of the polymer composite comprising organic natural fiber based material may be formed. Consequently, the lubricant may be added to the mixture by a second feeder 5 and mixed with a second mixer 6, which may also comprise a forming device 7, such as an extruder. This may achieve a good process controllability and different heating zones may be conveniently arranged with a control unit capable of monitoring the process temperature of the mixture when adding the lubricant.

Alternatively, the mixing of the organic natural fiber based material, polymer matrix and coupling agent may be done at a batch-type mixer, where the components may be added through a feeder. The batch reactor may be used as a vessel for the heating of the material, and may in addition be configured as the site for the coupling to occur between the organic natural fiber based material and the coupling agent. The mixed composite material may then be conveyed from the batch reactor further to a site where a lubricant is added, prior to forming the material, for example with an extruder.

The lubricant to be used may be a blend of compounds, for example aliphatic carboxylic acid salts and mono and diamines. The preferred amounts to produce the desired effects may contain lubricant equal to or less than 5.0 w-%, such as 4.0 w-%, 3.0-w-%, 2.0 w-%, 1.0 w-%, 0.5 w-%, 0.3 w-% or 0.1 w-% of the material. Favorably lubricant may be added equal to or less than 3.0 w-% of the material, such as 1.5 w-%, 1.0 w-%, 0.5 w-%, 0.3 w-% or 0.1 w-% of the material. Lubricant may for example be added equal to or more than 0.3 w-% of the material. Most favorably lubricant may be added 0.1 - 1.0 w-% of the material, such as 0.1 w-%, 0.3 w-%, 0.5 w-%, 0.8 w-% or 1.0 w-% of the material, which is considerably less than with conventional and recommended lubricants for composites, such as fatty acid compounds which do not contain metal ions. A subsequent technical effect of this invention, in addition to the enhanced physical properties, is that the lubricants containing metal may be considerably less expensive to use, which combined to the novel method that reduces the amount of lubricant needed may bring considerable savings to the production costs. This may be worth mentioning, as the lubricant can be a significant factor in the production costs of polymer composites comprising organic natural fiber based material.

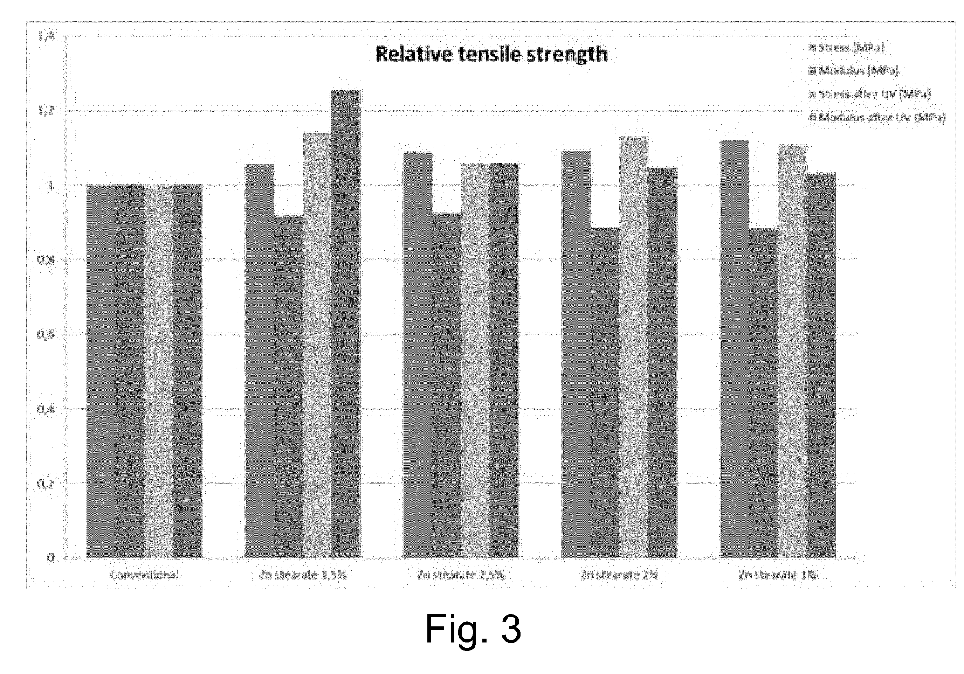

Fig 3 is a graphical presentation of an experiment, where the tensile strength of a composite comprising either 1 w-%, 1.5 w-%, 2 w-% or 2.5 w-% of a lubricant with a metal ion was compared to a composite comprising a lubricant without a metal ion. The stress and modulus of the samples was tested for untreated samples and compared to samples after weathering treatment in a UV cabin.

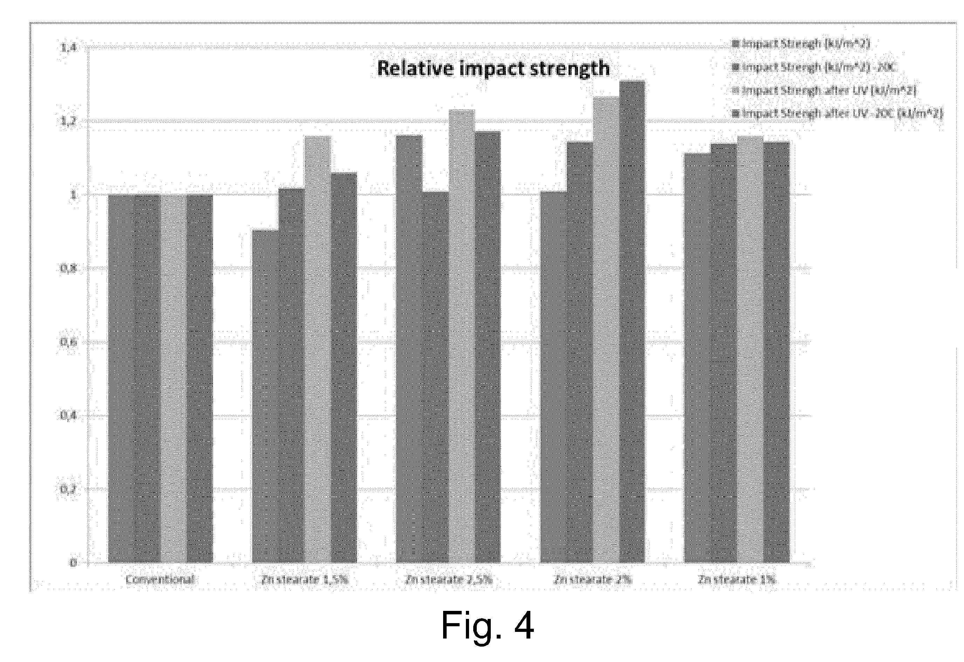

Fig 4 is a graphical presentation of an experiment, where the impact strength of a composite comprising either 1 w-%, 1.5 w-%, 2 w-% or 2.5 w-% of a lubricant with a metal ion was compared to a composite comprising a lubricant without a metal ion. The stress and modulus of the samples was tested for untreated samples and compared to samples after weathering treatment in a UV cabin.

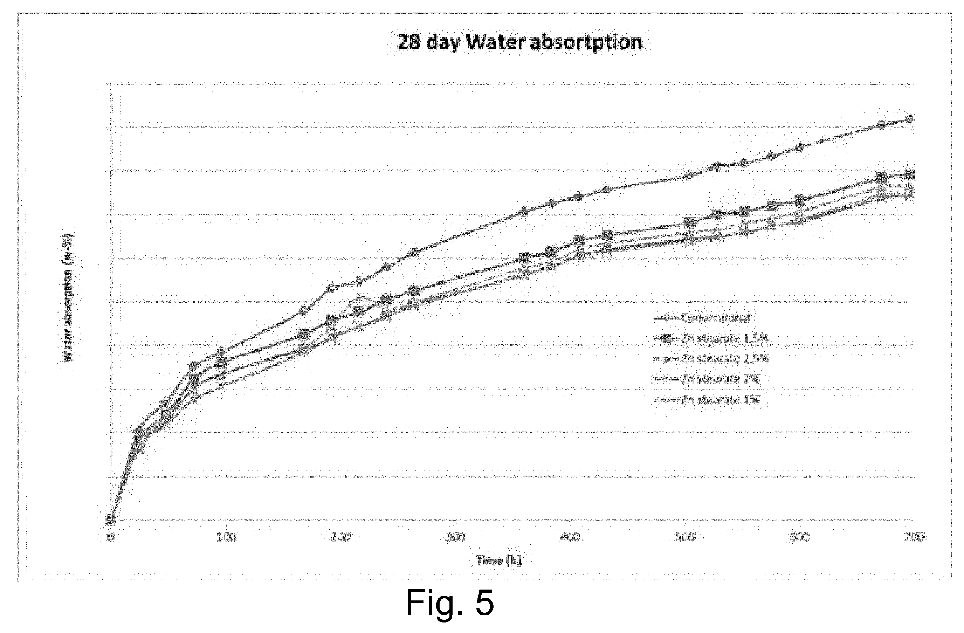

Fig 5 is a graphical presentation of an experiment, where the water absorption of a composite comprising either 1 w-%, 1.5 w-%, 2 w-% or 2.5 w-% of a lubricant with a metal ion was compared to a composite comprising a lubricant without a metal ion. The stress and modulus of the samples was tested for untreated samples and compared to samples after weathering treatment in a UV cabin.

In tests with a metal ion comprising lubricant the results showed excellent fiber dispersion, balanced flow across the die at an extruder with diminished friction at the material/extruder surfaces and high output rates. This was a novel finding and not expected, as this type of lubricant has not been thought to be compatible for use in a manufacturing process comprising a coupling agent. Furthermore, the properties of the formed composite surprisingly showed enhanced tensile and impact strength, especially after weathering treatment in a UV cabin, and displayed less water absorption. It was also appreciated, that the production of the organic natural fiber based polymer composite could be arranged by using less amounts of lubricant and consequently in a more cost effective manner.

The invention may allow the use of a lubricant containing metal in a method and a system to manufacture polymer composite comprising organic natural fiber based material. The lubricant may be used, for example, to manufacture a decking board. The invention may further allow addition of other materials that conventionally might be harmful to the process without interference. These materials could comprise, for example, various types of coloring pigments, which in many cases may contain metal ions.

### Example 1:

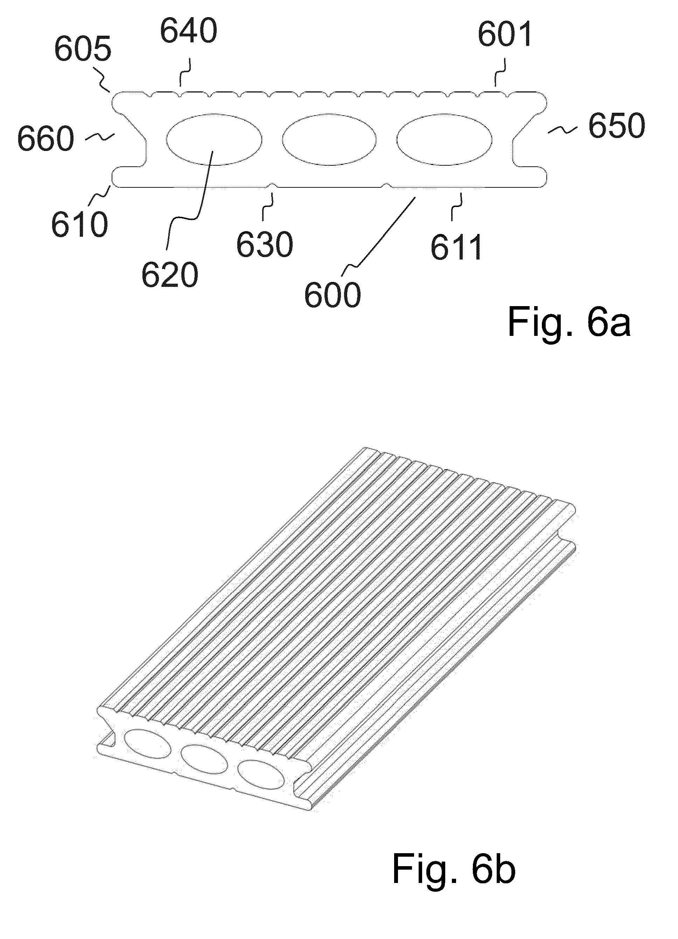

An example of a decking board 600 made of organic natural fiber based plastic composite where a lubricant containing metal may be used is shown in Fig 6a and 6b. The decking board 600 may comprise at least two corners 605 in a first side 601 and at least two corners 610 in a second side 611, and the corners 610 of the second side 611 have radiuses of curvature between 0.32 and 0.48 times a height of the corners of the second side 611. The decking board 600 has preferably at least two oval holes 620, more preferably at least three oval holes 620. The number of the oval holes 620 may be, for example, between 2 and 6 or between 3 and 5. According to an advantageous embodiment, the decking board comprises three oval holes 620. The weight of the product and the amount of the needed raw material decrease due to the holes 620. Shapes and dimensions of the oval holes 620 are preferably selected in such a way that it is possible to achieve very good runnability properties for the decking board 600 to be manufactured. The decking board 600 is preferably symmetrical in the width direction, i.e. the first transversal side 650 of the decking board is preferably substantially a mirror image of the second transversal side 660 of the decking board.

The first side 601 of the decking board 600 has preferably many very tiny grooves 640 in order to achieve high-friction surface. The width of the groove 640 may be between 5 and 20 mm, more preferably between 10 and 14 mm. The height of the groove 640 on the first side 601 may be between 1 and 2 mm. A radius of curvature of the groove 640 is preferably between 1 and 2 mm. Thanks to the tiny grooves 640, the friction of the first side 601 of the decking board 600 may be increased resulting in good anti-slip properties even when the first side 601 is wet. Moreover, the first side 601 may be easy to clean due to the very tiny size and rounded corners of the grooves 640.

The second side 611 of the decking board has preferably some grooves 630. The grooves 630 are added to the second side 611 in order to prevent possible problems caused by drying shrinkage. Due to the grooves 630, a blistering effect may be prevented. The grooves 630 are preferably small in size. The height of the grooves 630 is preferably between 0.2 and 3.0 mm or between 0.5 and 2.0 mm. The amount of the grooves 630 on the second side 611 is preferably one less than the amount of the oval holes 620 in the decking board 600. For example, if there are three oval holes 620 in the decking board 600, there are preferably two grooves 630 on the second side 611 of the decking board 600. The grooves 630 on the second side 611 are preferably placed at a location which is between the oval holes 620 in the vertical direction of the decking board 600 in such a way that there is always one groove 630 on the second side 611 of the decking board 600 at a location which is between the holes 620 in the vertical direction of the decking board 600. According to an advantageous embodiment, a distance between two grooves 630 is between 38 and 50 mm, preferably between 42 and 46 mm.

The width of the decking board 600 is preferably at least 20 mm, more preferably the width is between 20 and 40 mm. According to an advantageous embodiment the width of the decking board 600 is approximately 120 mm. The height of the decking board 600 is preferably at least 15 mm, more preferably at least 20 mm or at least 25 mm. In addition, the height of the decking board 600 is preferably 50 mm at the most or 40 mm at the most, more preferably 35 mm at the most or 30 mm at the most. According to an advantageous embodiment, the height of the decking board 600 is between 20 and 40 mm, or between 25 and 31 mm, for example 28 mm. The decking board may also have a surface roughness. For example, the bulges and depressions on the surface of the product may be arranged to have a deviation from 10 to 700 µm from the primary level of the surface.

The parameters and lubricants used in the manufacturing process may have an impact in the output rate and the physical properties and appearance of the output product. One skilled in the art readily understands that the different embodiments of the invention may have applications in environments where optimization of a process to manufacture a organic natural fiber based polymer composite is desired. Therefore, it is obvious that the present invention is not limited solely to the above-presented embodiments, but it can be modified within the scope of the appended claims.

According to an embodiment of the invention, and as explained above, a novel method was developed for arranging the reagents and preparing them to the manufacturing phase. Conventionally organic natural fiber based material, polymer matrix, coupling agent and lubricant may be mixed together at the same time for good homogeneity and flow properties. Therefore, due to the antagonist effect that may occur between a coupling agent and a lubricant, said lubricant does not contain metal. It was surprisingly and contrary to the expectations learned that by changing the procedure order in the production said lubricant could be replaced by another containing metal, such as zinc. Zinc stearate is a strong release agent, insoluble in polar solvents but more soluble in aromatic hydrocarbons when heated. It can be easily incorporated to a manufacturing process, it contains no electrolyte and has a hydrophobic effect. Alternatively, a lubricant may contain other metal ions such as calcium, magnesium, barium, aluminum or lead. Contrary to expectations the use of a metal ion did not disturb the manufacturing process nor the properties of the polymer composite comprising organic natural fiber based material. Rather, it made the process convenient to control and optimize, and improved the relative tensile, bending and impact strength as well as stiffness and diminished the water absorption of the end product. It was contemplated that heating a mixture comprising an organic natural fiber based material and a coupling agent enables coupling between said cellulose based fiber and said coupling agent. Once said coupling has occurred, the structure thus formed was stable. Adding a lubricant containing metal after said coupling does not break the structure nor interfere with the coupling agent. It was further considered that a lubricant containing metal may function as an external lubricant. Therefore, it can be insoluble in the polymer matrix and migrate towards a surface of the composite during a forming process, for example extrusion. This may lead to a composite where a surface of the product contains a higher concentration of said lubricant in comparison to the interior, which may further have an influence on higher durability and better impact, bending and tensile strength as well as stiffness of the composite. The tendency to migrate to the surface may allow to reduce the amounts of lubricant used for the process, which may lead to diminished amounts of material used and further to a cost-efficient production. If a lubricant comprising zinc stearate was added to the process in a stage when a coupling between the organic natural fiber based material and the coupling agent had already taken place, the thus formed polymer composite comprising organic natural fiber based material appeared to present said desirable effects of higher durability and improved impact, bending and tensile strength as well as stiffness, especially after treatment with ultra violet (UV) radiation in a weathering chamber. The weathering with UV radiation is of notice, as weathering is a common problem in products exposed to sunlight and UV radiation affects the polymer chains. Weathering may cause cracks or disintegration of the material, which is known as degradation.

According to an embodiment, there is provided a composite product that may comprise an organic natural fiber based material, a coupling agent, a polymer matrix and a lubricant containing metal, where a surface of the product contains a higher concentration of said lubricant compared to an interior of the product, in particular when the lubricant has been added after a mixture comprising the organic natural fiber based material and the polymer matrix has been coupling by heat and the coupling agent.

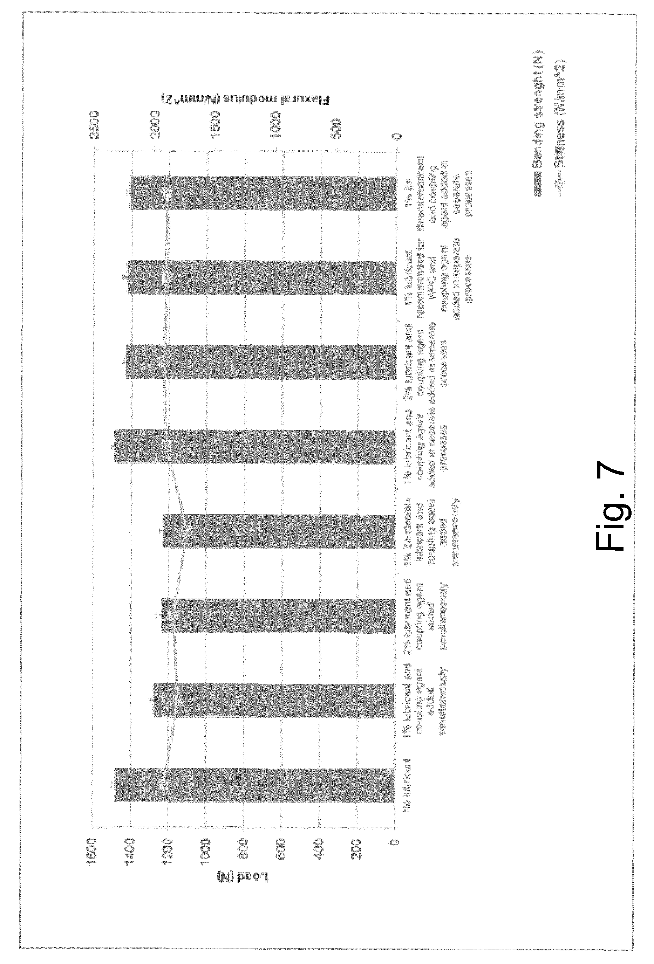

Fig. 7 is a graphical presentation of an experiment, where the bending strength and stiffness of various composites, including composites comprising no lubricant or comprising different lubricant of different concentration, said lubricant being added with coupling agent simultaneously or separately, was measured. In Fig. 7, the first bar, counted from the leftmost, shows the results of a composite comprising no lubricant;

the second bar shows the results of a composite comprising 1 w-% lubricant, which is a blend of an aliphatic carboxylic acid salts and mono and diamides containing 20-50 w-% zinc, and coupling agent, said coupling agent and lubricant being added simultaneously to the mixer during manufacturing the composite;

the third bar shows the results of a composite comprising 2 w-% lubricant, which is a blend of an aliphatic carboxylic acid salts and mono and diamides containing 20-50 w-% zinc, and coupling agent, said coupling agent and lubricant being added simultaneously to the mixer during manufacturing the composite;

the fourth bar shows the results of a composite comprising 1 w-% zinc stearate, a zinc salt of C16-C18 fatty acid, lubricant and coupling agent, said coupling agent and lubricant being added simultaneously to the mixer during manufacturing the composite;

the fifth bar shows the results of a composite comprising 1 w-% lubricant, which is a blend of an aliphatic carboxylic acid salts and mono and diamides containing 20-50 w-% zinc, and coupling agent, said coupling agent and lubricant being added in separate process, the former to the mixer and the latter to the extruder during manufacturing the composite;

the sixth bar shows the results of a composite comprising 2 w-% lubricant, which is a blend of an aliphatic carboxylic acid salts and mono and diamides containing 20-50 w-% zinc, and coupling agent, said coupling agent and lubricant being added in separate process, the former to the mixer and the latter to the extruder during manufacturing the composite;

the seventh bar shows the results of a composite comprising 1 w-% lubricant, which is a blend of complex containing modified fatty acid ester and is recommended for wood plastic composite (WPC), and coupling agent, said coupling agent and lubricant being added in separate process during manufacturing the composite;

the eighth bar shows the results of a composite comprising 1 w-% Zn stearate, a zinc salt of C16-C18 fatty acid, lubricant and coupling agent, said coupling agent and lubricant being added in separate process, the former to the mixer and the latter to the extruder during manufacturing the composite.

As can be seen in the diagram, the composites that were manufactured in such a way that the coupling agent and lubricant were added simultaneously in the processes possess worse bending strength and stiffness (Bar 2 to Bar 4), while the composites that were manufactured in such a way that the lubricant and coupling agent were added in separate processes possess better bending strength and stiffness (Bar 5 to Bar 8).

In conclusion, when manufacturing a polymer composite comprising organic natural fiber based material, it is advantageous to first provide a mixture comprising organic natural fiber based material and a coupling agent for coupling, and then to add lubricant. Providing a lubricant agent/package in combination with a coupling agent/package would not result in the composites that possess such improved properties as discussed above.

Numbered examples N1 to N17:
N1. According to an example, in a method for manufacturing a polymer composite comprising organic natural fiber based material, covalent bonds may be formed between said organic natural fiber based material and said coupling agent.
N2. According to an example, in a method for manufacturing a polymer composite comprising organic natural fiber based material, the organic natural fiber based material may contain printing ink.
N3. According to an example, in a method for manufacturing a polymer composite comprising organic natural fiber based material, the coupling agent and the polymer matrix may be entangled and hydrogen bonds may be formed between said coupling agent and said polymer matrix.
N4. According to an example, in a method for manufacturing a polymer composite comprising organic natural fiber based material, the coupling agent may be grafted thermoplastic polymer, for example maleic anhydride grafted thermoplastic polymer.
N5. According to an example, in a method for manufacturing a polymer composite comprising organic natural fiber based material, the polymer matrix may be thermoplastic polymer.
N6. According to an example, in a composite product comprising an organic natural fiber based material, a coupling agent, a polymer matrix and a lubricant containing metal, the amount of lubricant added to the composite may be in a range between 0.1 to 5.0 w-%, for example 0.3 to 3.0 w-%.
N7. According to an example, in a composite product comprising an organic natural fiber based material, a coupling agent, a polymer matrix and a lubricant containing metal, the lubricant is insoluble to a mixture comprising an organic natural fiber based material, a coupling agent and a polymer matrix.
N8. According to an example, in a composite product comprising an organic natural fiber based material, a coupling agent, a polymer matrix and a lubricant containing metal, the organic natural fiber based material may comprise cellulose.
N9. According to an example, a system for manufacturing a polymer composite comprising organic natural fiber based material with a lubricant containing metal, the system may comprise a control unit capable of monitoring the process temperature of the mixture when adding the lubricant.
N10. According to an example, a system for manufacturing a polymer composite comprising organic natural fiber based material with a lubricant containing metal, the system may comprise at least one feeder for feeding organic natural fiber based material, polymer matrix or coupling agent.
N11. According to an example, a system for manufacturing a polymer composite comprising organic natural fiber based material with a lubricant containing metal, the system may comprise one or more dosage units to measure the amounts of materials that are fed to said feeders.
N12. According to an example, a system for manufacturing a polymer composite comprising organic natural fiber based material with a lubricant containing metal, the system may comprise a device for shaping the polymer composite comprising organic natural fiber based material, for example an extruder or an injection moulding machine.
N13. According to an example, in a system for manufacturing a polymer composite comprising organic natural fiber based material with a lubricant containing metal, the system may comprise a mixer and device for shaping configured to enable the use of a lubricant containing metal in the process.
N14. According to an example, a lubricant containing metal may be used in a system configured to manufacture polymer composite comprising organic natural fiber based material.
N15. According to an example, a lubricant containing metal may be used for example in a decking board, where the decking board has a height between 20 and 40 mm and width between 20 and 400 mm, and which decking board comprises;
   - at least two corners in a first side;
   - at least two corners in a second side having radiuses of curvature between 0.32 and 0.48 times a height of the corners of the second side;
   - at least one oval hole
N16. According to an example, a lubricant containing metal may be used in a decking board according to numbered example N15, which has grooves on both the first side and the second side of the board, where the grooves on the first side have a width between 10 and 14 mm and a height between 1 and 2 mm and the grooves on the first side have a height between 0.5 and 2.0 mm and a distance between two grooves is between 42 and 46 mm.
N17. According to an example, a lubricant containing metal may be used according to numbered example N15 or N16 in a decking board with a rough surface characterized in that the deviation of bulges and depressions on the surface is from 10 to 700 µm from the average surface level.

## Claims

1. A method for manufacturing a polymer composite comprising organic natural fiber based material, which method comprises
a) providing heat to a mixture comprising organic natural fiber based material, a polymer matrix and a coupling agent, for coupling said organic natural fiber based material and said coupling agent; and
adding a lubricant to said mixture after coupling by said heat and said coupling agent.

2. The method according to claim 1, where said lubricant contains metal.

3. The method according to claim 2, where said metal is zinc.

4. The method according to any of the claims 1 - 3, where the lubricant is added to the mixture on a range between 0.1 to 5.0 w-%, for example 0.3 to 3.0 w-%.

5. The method according to any of the claims 1 - 4, where said organic natural fiber based material comprises cellulose.

6. The method according to any of the claims 1 - 5, where said organic natural fiber based material is produced by mechanical means and contains lignin.

7. The method for manufacturing a polymer composite comprising organic natural fiber based material according to any of the claims 1 - 6, where said lubricant is added to said mixture when said mixture has a temperature between 180°C - 230°C, for example at least 185°C.

8. The method according to any of the claims 1 - 7, where the product is formed after adding the lubricant, for example by heat and pressure.

9. A composite product comprising an organic natural fiber based material, a coupling agent, a polymer matrix and a lubricant containing metal.

10. The product according to claim 9, where said metal is zinc.

11. The product according to any of the claims 9 or 10, where a surface of the product contains a higher concentration of said lubricant compared to an interior of the product.

12. A polymer composite obtained by a method according to any of the claims 1 - 8.

13. A system for manufacturing a polymer composite comprising organic natural fiber based material with a lubricant containing metal, the system comprising:
a) at least one mixer for forming heat and a mixture comprising an organic natural fiber based material, a polymer matrix and a coupling agent; and
b) at least one feeder for adding said lubricant to said mixture after coupling by said heat and said coupling agent.

14. Use of a lubricant containing metal in manufacturing of a polymer composite comprising organic natural fiber based material.

15. Use of a lubricant containing metal in a polymer composite comprising organic natural fiber based material, for example in a decking board.
